Europäisches Patentamt

European Patent Office

Office européen des brevets

(19)

(11) Veröffentlichungsnummer: **0 057 820**
**B1**

(12) **EUROPÄISCHE PATENTSCHRIFT**

(45) Veröffentlichungstag der Patentschrift:
14.11.84

(21) Anmeldenummer: 82100210.2

(22) Anmeldetag: 14.01.82

(51) Int. Cl.³: **B 60 S 5/00**, B 60 Q 9/00

(54) Service-Intervall-Anzeigevorrichtung für Kraftfahrzeuge.

(30) Priorität: 06.02.81 DE 3104196

(43) Veröffentlichungstag der Anmeldung:
18.08.82 Patentblatt 82/33

(45) Bekanntmachung des Hinweises auf die Patenterteilung:
14.11.84 Patentblatt 84/46

(84) Benannte Vertragsstaaten:
DE FR GB IT SE

(56) Entgegenhaltungen:
US - A - 1 749 365

(73) Patentinhaber: BAYERISCHE MOTOREN WERKE
Aktiengesellschaft, Postfach 40 02 40 Petueiring 130,
D-8000 München 40 (DE)

(72) Erfinder: Mühlberger, Heinz, Dipl. Ing.,
Donauschwabenstrasse 6, D-8057 Eching (DE)
Erfinder: Starmühler, Erwin, Dipl. Ing.,
Schmuzerstrasse 1, D-8000 München 70 (DE)
Erfinder: Weishaupt, Walter, Ing. grad.,
Memlingstrasse 12, D-8000 München 71 (DE)
Erfinder: Flohr, Peter, Franziskaner Strasse 16,
D-8000 München 80 (DE)
Erfinder: Bourauel, Fritz, Am Grohplatz 1,
D-8000 München 45 (DE)

(74) Vertreter: Bullwein, Fritz Bayerische Motoren Werke
Aktiengesellschaft, Postfach 40 02 40 -
AJ-23 Petueiring 130, D-8000 München 40 (DE)

## Beschreibung

Die Erfindung bezieht sich auf eine Service-Intervall-Anzeigevorrichtung für Kraftfahrzeuge, die nach Zurücklegen eines Sollwegs ein Signal liefert.

Bei bekannten derartigen Anzeigevorrichtungen wird ausschliesslich der zurückgelegte Weg berücksichtigt. Nicht berücksichtigt wird hingegen die tatsächliche Belastung des Fahrzeugmotors. Dies hat zur Folge, dass ein Service häufig viel zu früh durchgeführt wird, da der Sollweg so bemessen sein muss, dass auch unter extremen Belastungen des Fahrzeugmotors, wie sie beispielsweise bei einem Kaltstart und anschliessender Vollgasfahrt vorkommen, der Service rechtzeitig durchgeführt wird. Für die Mehrzahl der Fahrzeughalter bedeutet dies unnötig hohe Betriebskosten. Volkswirtschaftlich ist es ebenfalls nachteilig, da häufig Teile vorsorglich ausgewechselt werden, die noch für gewisse Wegstrecken fehlerfrei arbeiten würden und daher im Fahrzeug verbleiben könnten.

Des Erfindung liegt die Aufgabe zugrunde, eine Anzeigevorrichtung der eingangs gennanten Art zu schaffen, die auf einen notwendigen Service gerade dann hinweist, wenn er tatsächlich erforderlich ist.

Die Lösung dieser Aufgabe besteht darin, dass der Sollweg aus dem tatsächlich zurückgelegten Weg und einem zusätzlichen Anteil zusammengesetzt ist, der entsprechend der Belastung des Fahrzeugmotors gebildet ist.

Durch die Erfindung lässt sich das Service-Intervall den tatsächlichen Erfordernissen anpassen. Bei einer schonenden Betriebsweise, beispielsweise durch Vermeiden von extremen Motordrehzahlen, kann das Service-Intervall länger ausgedehnt werden, als bei einer ausschliesslichen Berücksichtigung des zurückgelegten Wegs oder einer überwiegend extremen Belastung des Fahrzeugmotors. Nur bei einer Fahrweise mit extremer Belastung des Fahrzeugmotors wird es erforderlich sein, relativ häufig einen Service durchführen zu lassen. Durch die Erfindung kann somit eine mehr schonende Betriebsweise der Kraftfahrzeuge und, damit verbunden, ein geringerer Kraftstoffverbrauch und eine längere Haltbarkeit der Kraftfahrzeuge erreicht werden.

Die Berücksichtigung der Belastung des Fahrzeugmotors kann in verschiedener Weise erfolgen. So ist es möglich, entsprechend dieser Belastung den zusätzlichen Anteil additiv zuzufügen. Demgegenüber lässt sich der zusätzliche Anteil schaltungstechnisch besonders einfach und mit grosser Genauigkeit dadurch berücksichtigen, dass die Belastung in Form eines Faktors, mit dem der zurückgelegte Weg vor seiner Registrierung beaufschlagt wird, multipliziert wird. Eine derartige Multiplikation kann beispielsweise durch Einführen von Vorteilern vorgenommen werden, denen Wegimpulse entsprechend der zurückgelegten Wegstrecke zugeführt werden und die beispielsweise bei einer extremen Belastung des Fahrzeugmotors unwirksam geschaltet werden.

Dieser Faktor kann in unterschiedlicher Weise zur Geltung kommen. So ist es beispielsweise möglich, dass der Faktor nur bei einem extremen Wert eines Betriebsparameters wirksam ist. Der Faktor kann dabei so lange eingeschaltet sein, wie der extreme Wert vorliegt oder aber bis eine vorgegebene Wegstrecke zurückgelegt ist.

Der Faktor kann aber auch nur so lange wirksam sein, wie der Wert des Betriebsparameters über einem vorgegebenen Grenzwert liegt. In diesem Fall wird der Faktor ebenfalls nur während einer extremen Belastung des Fahrzeugmotors wirksam, während er bei einer normalen Belastung nicht in Erscheinung tritt. Dadurch kann auch hier der rechnerische Aufwand gering gehalten werden.

Ein Faktor, der nur bei einem extremen Wert eines Betriebsparameters wirksam ist, kann konstant sein oder sich entsprechend dem Wert des Betriebsparameters ändern. Während ein konstanter Faktor mit geringem Rechenaufwand berücksichtigt werden kann, bietet ein sich ändernder Faktor den Vorteil, dass der durch den Faktor gegebene Zuschlag entsprechend den tatsächlichen Erfordernissen gewählt werden und das Service-Intervall optimal vorgegeben werden kann.

Eine weitere Optimierung des Service-Intervalls lässt sich dadurch erzielen, dass der Faktor aus mehreren Teilen zusammengesetzt ist, die unterschiedlichen Betriebsparametern zugeordnet sind. Da eine übermässige Belastung des Fahrzeugmotors bei extremen Werten unterschiedlicher Parameter auftreten kann, lässt sich durch Berücksichtigung aller oder eines Grossteils dieser Parameter das Service-Intervall exakt wählen.

Als Belastungskriterium kann die Motordrehzahl, die Temperatur einer Betriebsflüssigkeit wie Kühlwasser oder Motoröl und/oder die Kraftstoffverbrauchsrate dienen. Für sämtliche Kriterien sind in üblichen Kraftfahrzeugen ohnehin bereits Geber vorgesehen, so dass die Aufnahme dieses Kriteriums mit geringem apparativen Aufwand möglich ist.

Im Rahmen der Erfindung kann eine weitere vorteilhafte Massnahme darin bestehen, den Sollweg in gleiche Intervalle zu unterteilen und jedem dieser Intervalle eine Kontrolleuchte zuzuordnen, die am Ende des Intervalls erlischt. Die Unterteilung des Sollwegs in gleiche Intervalle ist im Patent EP-B Nr. 57821 beansprucht. Durch die Aufteilung der Intervalle kann somit bereits vor Zurücklegen des Sollwegs eine besonders belastende Fahrweise erkannt werden, da dann die Kontrolleuchte des zugehörigen Intervalls erkennbar schneller erlischt.

Häufig wird es ausreichend sein, die Kontrolleuchten nur vor dem Start des Fahrzeugmotors einzuschalten und bei oder nach dem Anlassen des Fahrzeugmotors auszuschalten. Bei jedem Startvorgang erhält der Fahrer somit Auskunft über die noch verbleibende Fahrstrecke und ist andererseits während der Fahrt durch die Kontrolleuchten nicht gestört.

Zusätzlich zu den Kontrolleuchten können nach Zurücklegen des in der erfindungsgemässen Weise aus dem zurückgelegten und bewerteten Weg gebildeten Sollweg Warnleuchten nach gleichen Wegintervallen bleibend eingeschaltet werden. Auch diese Wegintervalle können durch Bewertung des zurückgelegten Wegs bestimmt werden. Der Fahrer erhält somit mit zunehmender Dringlichkeit einen Hinweis auf die Notwendigkeit einer Wartung.

Um zu erreichen, dass auch bei einer extrem geringen jährlichen Fahrstrecke auf einen Service hingewiesen wird, kann dem Sollweg eine Sollzeit zugeordnet sein, nach deren Ablauf ebenfalls das Signal erscheint. In derartigen Fällen wird der Service infolge von Alterungserscheinungen, beispielsweise der verwendeten Betriebsflüssigkeiten, erforderlich; Erscheinungen, die bei einer normalen Betriebsweise und Fahrstrecke nicht ins Gewicht fallen. Damit wird auch für sog. Wenig-Fahrer das Service-Intervall optimiert und auf einen Service hingewiesen, wenn dieser notwendig ist.

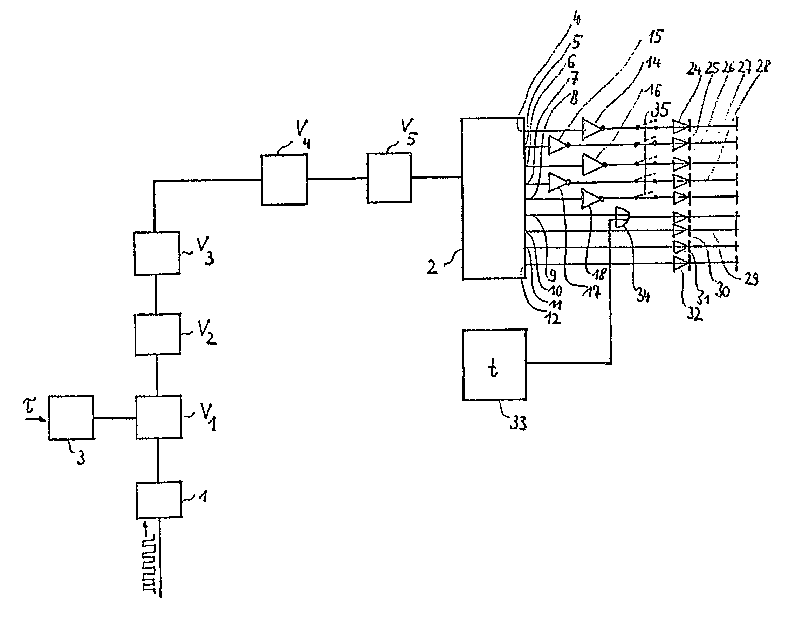

Die Erfindung ist anhand eines in der Zeichnung dargestellten Ausführungsbeispiels weiter erläutert. Die Zeichnung zeigt eine Schaltanordnung für eine Service-Intervall-Anzeigevorrichtung, bei der der zurückgelegte Weg entsprechend der Motorbelastung bewertet ist.

In die Schaltanordnung gelangen Wegimpulse entsprechend der zurückgelegten Wegstrecke, die beispielsweise mit Hilfe eines Reed-Kontakts an der Hinterachse des Kraftfahrzeugs entsprechend der Raddrehzahl ausgelöst werden. Die Wegimpulse gelangen über einen Typcodierer 1, mit dem unterschiedliche Radgrössen und Fahrzeugtypen berücksichtigt werden, über Vorteiler $V_1$ bis $V_5$ in einen Speicher 2. Der Vorteiler $V_1$ berücksichtigt eine extreme Belastung des Fahrzeugmotors infolge einer niedrigen Temperatur einer Betriebsflüssigkeit, wie beispielsweise dem Motorenöl. Hierzu ist das Ausgangssignal eines nicht dargestellten Motorenöl-Temperaturgebers auf einen Komparator 3 geführt, der unter einer vorgegebenen Temperatur von z.B. 320 K ein Ausgangssignal liefert und den Vorteiler $V_1$ dann ausschaltet. Das bedeutet, dass der Vorteiler $V_1$ über dieser Temperatur wirksam ist und dann die Zahl der an den Vorteiler $V_2$ weitergegebenen Impulse verringert.

Der Vorteiler $V_2$ berücksichtigt die Kraftstoffverbrauchsrate und ist ebenfalls so lange eingeschaltet, wie diese Rate unter einem vorgegebenen Grenzwert liegt.

Die Vorteiler $V_3$ und $V_4$ berücksichtigen eine Belastung des Fahrzeugmotors infolge einer hohen Motordrehzahl. Der Vorteiler $V_3$ ist dabei so lange eingeschaltet, bis eine vorgegebene Grenzdrehzahl von z.B. 5000 tr/min noch nicht erreicht ist. Der Vorteiler $V_4$ ist so lange wirksam, bis die Drehzahl einen zweiten, höheren Grenzwert von z.B. 6000 tr/min übersteigt. Die Vorteiler $V_3$ und $V_4$ berücksichtigen somit digital unterschiedlich hohe Drehzahlen.

Die Ausschaltdauer der Vorteiler $V_1$ bis $V_4$ kann so lange gewählt sein, wie die berücksichtigte extreme Belastung des Fahrzeugmotors anhält. Sie kann aber auch für eine vorgegebene Zeit bzw. Wegstrecke gewählt sein. Hierzu können nicht dargestellte Zeitglieder bzw. Wegimpulszähler dienen, die die Ausschaltdauer der Vorteiler bestimmen.

Der Vorteiler $V_5$ liefert für vorgegebene Sollwegstrecken von z.B. 2400 km jeweils ein Ausgangssignal. Diese Wegstrecke entspricht, sofern keinerlei extreme Belastungen des Fahrzeugmotors aufgetreten sind, exakt der zurückgelegten Wegstrecke. Im Falle von Belastungen hingegen ist diese Wegstrecke entsprechend den durch die Vorteiler $V_1$ bis $V_5$ gegebenen Belastungsfaktoren grösser als die tatsächliche zurückgelegte Wegstrecke. Das Verhältnis der mit Hilfe der Vorteiler $V_1$ bis $V_4$ berechneten und der tatsächlich zurückgelegten Wegstrecke ist um so grösser, je grösser die Belastung des Fahrzeugmotors gewesen ist.

Die Ausgangsimpulse des Vorteilers $V_5$ gelangen in den als Schieberegister ausgebildeten Speicher 2, der seine Ausgänge 4 bis 12 im Abstand von 2400 km bewerteter, d.h. durch Berechnung aus der tatsächlich zurückgelegten Wegstrecke gewonnener Wegstrecke einschaltet.

Die Ausgänge 4 bis 8 sind über Inverter 14 bis 18 mit z.B. grünen Leuchtdioden 24 bis 28 verbunden, die der Reihe nach im Abstand dieser Wegstrecken erlöschen. Entsprechend der Fahrweise und den übrigen Bedingungen bleiben die Leuchtdioden, bezogen auf die Wegintervalle von 2400 km und im Verhältnis zu einer Fahrweise mit extremer Belastung des Fahrzeugmotors um so länger eingeschaltet, je schonender der Fahrzeugmotor betrieben wird.

Die weiteren Ausgänge 9 bis 12 des Speichers 2 sind unmittelbar mit Leuchtdioden 29 bis 32 verbunden, die beispielsweise eine gelbe bzw. rote Farbe besitzen. Die Leuchtdiode 29 ist ferner über einen Zeitgeber 33 und ein eingeschaltetes ODER-Glied 34 angesteuert, der nach einer Betriebsdauer von z.B. 11 Monaten nach Durchführen der letzten Wartung ein Ausgangssignal liefert. Die Leuchtdiode 29, die nach Zurücklegen des Sollwegs von 12 000 km entsprechend fünf Ausgangsimpulsen des Vorteilers $V_5$ leuchtet, wird somit auch nach der durch den Zeitgeber 33 bestimmten Sollzeit eingeschaltet und macht auch in diesem Fall darauf aufmerksam, dass ein Service erforderlich ist.

Die weiteren Leuchtdioden 30 bis 32 verstärken die Dringlichkeit einer durchzuführenden Wartung.

Anstelle von lediglich digital wirkenden Vorteilern $V_1$ bis $V_4$ kann die Belastung des Fahrzeugmotors auch analog berücksichtigt werden. Hierzu können Rechenglieder vorgesehen sein, die die ankommenden Wegimpulse mit einem entsprechend dem berücksichtigten Betriebsparameter veränderlichen Faktor multiplizieren bzw. im Falle mehrerer Betriebsparameter die Summe derartiger veränderlicher Faktoren bilden.

Um eine unnötige Beeinträchtigung des Fahrers durch die Anzeigevorrichtung zu vermeiden, können zumindest die Leuchtdioden 24 bis 28 in Reihe mit einem Öldruckschalter 35 od. dgl. geschaltet sein. Sofern die zugehörigen Sollwegstrecken noch nicht abgelaufen sind, leuchten die Leuchtdioden so lange, bis das Betriebskriterium des Fahrzeugmotors (hier Motoröldruck) erfüllt ist.

**Patentansprüche**

1. Service-Intervall-Anzeigevorrichtung für Kraftfahrzeuge, die nach Zurücklegen eines Sollwegs ein Signal liefert, dadurch gekennzeichnet, dass der Sollweg aus dem tatsächlich zurückgelegten Weg und einem zusätzlichen Anteil zusammengesetzt ist, der entsprechend der Belastung des Fahrzeugmotors gebildet ist.

2. Anzeigevorrichtung nach Anspruch 1, dadurch gekennzeichnet, dass die Belastung des Fahrzeugmotors durch einen Faktor berücksichtigt wird, mit dem der zurückgelegte Weg vor seiner Registrierung beaufschlagt wird.

3. Anzeigevorrichtung nach Anspruch 2, dadurch gekennzeichnet, dass der Faktor nur bei einem extremen Wert eines Betriebsparameters wirksam ist.

4. Anzeigevorrichtung nach Anspruch 3, dadurch gekennzeichnet, dass der Faktor nur so lange wirksam ist, wie der Wert des Betriebsparameters über einem vorgegebenen Grenzwert liegt.

5. Anzeigevorrichtung nach Anspruch 4, dadurch gekennzeichnet, das der Faktor konstant ist.

6. Anzeigevorrichtung nach Anspruch 4, dadurch gekennzeichnet, dass der Wert des Faktors sich entsprechend dem Wert des Betriebsparameters ändert.

7. Anzeigevorrichtung nach einem der Ansprüche 2 bis 6, dadurch gekennzeichnet, dass der Faktor aus mehreren Teilen zusammengesetzt ist, die unterschiedlichen Betriebsparametern zugeordnet sind.

8. Anzeigevorrichtung nach einem der Ansprüche 1 bis 7, dadurch gekennzeichnet, dass als Kriterium der Belastung die Motordrehzahl dient.

9. Anzeigevorrichtung nach einem der Ansprüche 1 bis 8, dadurch gekennzeichnet, dass als Kriterium der Belastung die Temperatur einer Betriebsflüssigkeit dient.

10. Anzeigevorrichtung nach Anspruch 9, dadurch gekennzeichnet, dass die Betriebsflüssigkeit das Kühlwasser ist.

11. Anzeigevorrichtung nach Anspruch 9, dadurch gekennzeichnet, dass die Betriebsflüssigkeit das Motorenöl ist.

12. Anzeigevorrichtung nach einem der Ansprüche 1 bis 11, dadurch gekennzeichnet, dass als Kriterium der Belastung die Kraftstoffverbrauchsrate dient.

13. Anzeigevorrichtung nach einem der Ansprüche 1 bis 12, dadurch gekennzeichnet, dass der Sollweg in gleiche Intervalle unterteilt ist und dass jedem dieser Intervalle eine Kontrolleuchte (24 bis 28) zugeordnet ist, die am Ende des Intervalls erlischt.

14. Anzeigevorrichtung nach Anspruch 13, dadurch gekennzeichnet, dass die Kontrolleuchten auch bei oder unmittelbar nach dem Anlassen des Fahrzeugmotors erlöschen.

15. Anzeigevorrichtung nach einem der beiden Ansprüche 13 oder 14, dadurch gekennzeichnet, dass nach dem Sollweg Warnleuchten (29 bis 32) nach gleichen Wegintervallen bleibend eingeschaltet werden.

16. Anzeigevorrichtung nach einem der Ansprüche 1 bis 15, dadurch gekennzeichnet, dass dem Sollweg eine Sollzeit (Zeitgeber 33) zugeordnet ist, nach deren Ablauf ebenfalls das Signal erscheint.

**Revendications**

1. Indicateur d'intervalle de révision pour véhicule à moteur, qui fournit un signal lorsqu'un parcours de consigne est exécuté, caractérisé en ce que le parcours de consigne se compose du parcours effectivement parcouru et d'une fraction supplémentaire qui est formée en fonction de la charge du moteur du véhicule.

2. Indicateur selon la revendication 1, caractérisé en ce que la charge du moteur du véhicule est prise en compte par un facteur qui agit sur le parcours réalisé avant son enregistrement.

3. Indicateur selon la revendication 2, caractérisé en ce que le facteur n'est mis en œuvre que pour une valeur extrême d'un paramètre de fonctionnement.

4. Indicateur selon la revendication 3, caractérisé en ce que le facteur n'agit que le temps pendant lequel la valeur du paramètre de fonctionnement est supérieure à une valeur limite prédéterminée.

5. Indicateur selon la revendication 4, caractérisé en ce que le facteur est constant.

6. Indicateur selon la revendication 4, caractérisé en ce que la valeur du facteur varie en fonction de la valeur du paramètre de fonctionnement.

7. Indicateur selon l'une des revendications 2 à 6, caractérisé en ce que le facteur est composé de plusieurs parties auxquelles sont associés des paramètres de fonctionnement différents.

8. Indicateur selon l'une des revendications 1 à 7, caractérisé en ce que le critère de la charge est la vitesse de rotation du moteur.

9. Indicateur selon l'une des revendications 1 à 8, caractérisé en ce que le critère de la charge est la température d'un liquide de fonctionnement.

10. Indicateur selon la revendication 9, caractérisé en ce que le liquide de fonctionnement est l'eau de refroidissement.

11. Indicateur selon la revendication 9, caractérisé en ce que le liquide de fonctionnement est l'huile du moteur.

12. Indicateur selon l'une des revendications 1 à 11, caractérisé en ce que le critère de la charge est le débit de consommation de carburant.

13. Indicateur selon l'une des revendications 1 à 12, caractérisé en ce que le parcours de consigne est subdivisé en des intervalles identiques et en ce qu'à chaque intervalle est associé un voyant de contrôle (24 à 28) qui s'éteint à la fin de l'intervalle.

14. Indicateur selon la revendication 13, caractérisé en ce que les voyants de contrôle s'éteignent lors du démarrage du moteur du véhicule ou directement après ce démarrage.

15. Indicateur selon l'une des revendications 13 ou 14, caractérisé en ce que, après le parcours de consigne, les voyants de signalisation (29 à 32) restent allumés en permanence après les intervalles de parcours identiques.

16. Indicateur selon l'une des revendications 1 à 15, caractérisé en ce qu'une durée de consigne (générateur de temps 33) est associée au parcours de consigne, durée à la fin de laquelle apparaît également le signal.

## Claims

1. A service interval indicating device for motor vehicles, which delivers a signal after a required distance has been covered, characterized in that the required distance is composed of the actual distance covered and an additional proportion which is formed according to the load of the vehicle engine.

2. An indicating device according to Claim 1, characterized in that the load of the vehicle engine is taken into account by means of a factor whereby the distance covered is acted upon prior to its registration.

3. An indicating device according to Claim 2, characterized in that the factor is effective only at an extreme value of an operating parameter.

4. An indicating device according to Claim 3, characterized in that the factor is effective only as long as the value of the operating parameter lies above a predetermined limiting value.

5. An indicating device according to Claim 4, characterized in that the factor is constant.

6. An indicating device according to Claim 4, characterized in that the value of the factor varies in dependence upon the value of the operating parameter.

7. An indicating device according to one of Claims 2 to 6, characterized in that the factor consists of several parts which are associated with the various operating parameters.

8. An indicating device according to one of Claims 1 to 7, characterized in that the engine speed serves as a criterion for the load.

9. An indicating device according to one of Claims 1 to 8, characterized in that the temperature of an operating fluid serves as the criterion for the load.

10. An indicating device according to Claim 9, characterized in that the operating fluid is the cooling water.

11. An indicating device according to Claim 9, characterized in that the operating fluid is the engine oil.

12. An indicating device according to one of Claims 1 to 11, characterized in that the fuel consumption serves as the criterion for the load.

13. An indicating device according to one of Claims 1 to 12, characterized in that the required distance is divided into equal intervals, and in that a control light (24 to 28), which is extinguished at the end of the interval, is associated with said equal intervals.

14. An indicating device according to Claim 13, characterized in that the control lights are also extinguished when or directly after the vehicle engine is started up.

15. An indicating device according to one of Claims 13 or 14, characterized in that, following the required distance warning lights (29 to 32) are switched on and remain so after like distance intervals.

16. An indicating device according to one of Claims 1 to 15, characterized in that a required time (timer 33) is associated with the required distance, the signal likewise appearing after this required time has elapsed.